# NEUE EUROPÄISCHE PATENTSCHRIFT

(11) **EP 1 277 388 B2**
(45) Veröffentlichungstag und Bekanntmachung des Hinweises auf die Entscheidung über den Einspruch: **20.04.2011**
(45) Hinweis auf die Patenterteilung: 27.12.2006
(21) Anmeldenummer: 02015329.2
(22) Anmeldetag: 10.07.2002
(51) Int. Cl.: A01D 41/12

(54) **Steuerungssystem eines landwirtschaftlichen Geräts**
Operating system for agricultural machinery
Système de commande d'une machine agricole

(30) Priorität: 16.07.2001 US 906490
(43) Veröffentlichungstag der Anmeldung: 22.01.2003
(73) Patentinhaber: DEERE & COMPANY, Moline, Illinois 61265-8098 (US)
(72) Erfinder: Ma, Xinghan, Erie, IL 61250 (US); Mertins, Karl-Heinz Otto, Davenport, IA 52807 (US); Beck, Folker, Dr., Bettendorf, IA 52722 (US)
(74) Vertreter: Holst, Sönke

(56) Entgegenhaltungen:
- EP-A- 1 051 898
- DE-A- 19 921 466
- US-A- 4 296 409
- US-A- 5 586 033
- US-A- 5 684 691
- US-A- 5 828 971
- US-B1- 6 205 384
- "Fuzzy Controllers", Leonid Reznik. Published by Newnes, 1997. ISBN 0 7506 3429 4. pages v-viii, 107-131, 153-179, 187 188 198 267-272

## Beschreibung

Die Erfindung betrifft ein Steuerungssystem zur Steuerung eines landwirtschaftlichen Geräts, das eine Mehrzahl an einstellbaren Einrichtungen aufweist, die den Betrieb des Geräts beeinflussen, mit einer Mehrzahl von Aktoren, die mit den einstellbaren Einrichtungen verbunden sind, einer Mehrzahl an Sensoren, die Eingabesignale bereitstellen, die Informationen über Arbeitsbedingungen des Geräts und von den einstellbaren Einrichtungen beeinflusste Variablen beinhalten, und einer Steuerung mit einem Fuzzy-Inferenzsystem, die mit den Aktoren verbunden ist und auf die Eingabesignale reagiert und die einstellbaren Einrichtungen steuert.

Eine moderne landwirtschaftliche Erntemaschine wie beispielsweise ein Mähdrescher ist quasi eine auf dem Feld arbeitende Fabrik mit vielen wechselwirkenden und komplexen Einstellungen zur Anpassung an sich während der Ernte kontinuierlich ändernde Gut-, Feld- und Maschinenbedingungen. Begrenzte und oft ungenaue Messungen machen eine richtige Vor- und Nacheinstellung der Maschine sehr schwierig. Verluste unrichtig eingestellter Mähdrescher können wesentlich sein, und die Qualität der Einstellungen hängt von den Fähigkeiten des Bedieners ab. Da der Bediener den Mähdrescher gewöhnlich anhalten muss, ist das Durchführen der notwendigen Einstellungen zeitaufwändig und wird manchmal ignoriert, so dass die Produktivität beeinträchtigt wird.

Trotz vieler Jahre an Versuchen, die Mähdrescher automatisch zu steuern, sind Eingaben von geübten Bedienern, die viele Kenntnisse angesammelt haben, für eine richtige Einstellung und Steuerung der Maschine wesentlich. Das Wissen des Bedieners ist häufig in einer Form, die nicht in konventionelle Steuersysteme aufgenommen werden kann.

Beispiele herkömmlicher Mähdreschersteuersysteme umfassen solche mit abrufbaren Tabellen, die in einem sich an Bord befindlichen Speicher abgelegt sind, wie in der US 6 205 384 A gezeigt und beschrieben. Bei derartigen Systemen werden gegenwärtige Bedingungen als Gruppe mit im Speicher abgelegten Gruppen verglichen. Wenn gegenwärtige Bedingungen als Gruppe mit einer gespeicherten Gruppe (wie hoch, normal und klein) zusammenpassen, werden die den Bedingungen entsprechenden gespeicherten Maschineneinstellungen zur Einstellung der Maschine verwendet. Neue Einstellungen können durch einen Bediener über eine Tastatur eingegeben werden. Eines der mit diesem Ansatz verbundenen Probleme besteht grundsätzlich darin, dass es sich um einen Ansatz mit offener Schleife handelt. Die Maschineneinstellungen werden durch historische, in der abrufbaren Tabelle gespeicherte Daten festgelegt, anstelle durch Ergebnisse der Steuerung. Im Ergebnis stellt ein derartiger Typ eines Systems mit offener Schleife keine Kompensation für Änderungen der Maschine, des Ernteguts, des Felds und der Umgebung bereit.

Ein anderes Beispiel einer Erntemaschineneinstellung ist in der US 5 586 033 A gezeigt und beschrieben, in der das Steuersystem ein neuronales Netzwerkmodell der Erntemaschine mit Daten trainiert. Das Modell wird dann benutzt, die Einstellungen der Erntemaschine festzulegen. Neuronale Netze mit großer Kapazität erfordern jedoch einen unerschwinglichen Berechnungsaufwand. Bei dem gegenwärtigen Entwicklungsstatus neuronaler Netzwerktechniken haben große neuronale Netzwerke einen begrenzten praktischen Nutzen in Erntemaschinenanwendungen.

Die EP 1 051 898 A beschreibt eine Erntemaschine, bei der die eingehende Gutmenge gemessen wird. Der Messwert wird einer Steuerung mit einem Fuzzy-Regler zugeführt, dessen Ausgang die Vortriebsgeschwindigkeit der Erntemaschine und die Fördergeschwindigkeit, mit der das Erntegut eingezogen wird, steuert. Die unscharfe Logik erzeugt Zugehörigkeitsfunktionen für die Eingangsvariablen und ermittelt nach einem Regelwerk Ausgangswerte. Die dem Regelwerk zu Grunde liegenden Parameter, d. h. Regeln und Schlussfolgerungen, sind statisch. Der Steuerung werden auch andere Daten von gesteuerten Elementen zugeführt, beispielsweise über die Motordrehzahl, die jedoch nicht dem Fuzzy-Regler zugeführt werden. Diese Daten dienen zur Überwachung des gesamten Prozesses.

Zahlreiche andere Erntemaschineneinstellverfahren und -geräte wurden eingesetzt. Die meisten der Verfahren versuchen jedoch Untersysteme des Ernteprozesses zu steuern, wie Steuerungen der Drescheinheit oder Steuerungen des Reinigungsventilators, mit traditionellen Steuerungsansätzen. Diese Ansätze waren größtenteils im Markt nicht erfolgreich, da sie dabei versagen, Wechselwirkungen zwischen den Ernteuntersystemen zu berücksichtigen.

Die der Erfindung zugrunde liegende Aufgabe wird darin gesehen, ein verbessertes Steuersystem für eine landwirtschaftliche Erntemaschine bereitzustellen, das die meisten oder alle der zuvor genannten Probleme löst.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das erfindungsgemäße Steuerungssystem umfasst eine Steuerung, welche die Qualität des Arbeitsvorgangs des Geräts überwacht. Als Beispiel für eine überwachte, von den einstellbaren Einrichtungen beeinflusste Qualitäts-Variable kann eine Leistung des Geräts überwacht werden. Der Steuerung werden auch Messwerte von Sensoren bezüglich der Eingabebedingungen des Geräts (z.B. Umgebungsdaten) und vorzugsweise auch Rückkopplungssignale zugeführt, die Informationen über die jeweiligen Einstellungen der von der Steuerung verstellbaren Elemente enthalten. Basierend auf den Messungen der Qualität und den Informationen über die Eingabebedingungen werden Einstellpunkte für alle kritischen Funktionselemente des Geräts festgelegt. Das Steuerungssystem umfasst ein lernendes Fuzzy-Inferenzsystem mit unscharfer Logik, das Arbeitsbedingungen lernt und sich an sie erinnert. Wenn das Steuerungssystem an einem Mähdrescher verwendet wird, werden alle kritischen Elemente der Qualität des Ernteprozesses überwacht und gesteuert. Durch die Benutzung unscharfer Logik und lernfähiger Elemente hat das Steuerungssystem die Fähigkeit, sich an vergangene Erntesituationen in einer Art, die ähnlich der eines menschlichen Bedieners ist, zu erinnern. Einstellungen der Dresch- und Trenneinrichtungen und des Reinigungssystems werden während der Fahrt durchgeführt, um sich ändernde Ernte- und Gutbedingungen auszugleichen. Der Steuerung werden auch Informationen über Eingabebedingungen des Geräts zugeführt, wie Informationen über Wetterbedingungen, Bedingungen des Ernteguts, die Umgebung, das Gerät und die Einstellungen.

Auf diese Weise erhält man ein Steuerungssystem für ein landwirtschaftliches Gerät, beispielsweise einen Mähdrescher, das die Fähigkeit hat, zu lernen, und sich an variierende Bedingungen anzupassen. Es kann Änderungen in der Hardware, Abnutzungen von Komponenten sowie Variationen der Erntegutbedingungen und der Umgebungseinflüsse ausgleichen. Es kann neue Maschineneinstellungen, die es aus neuen Erfahrungen gelernt hat, aufnehmen. Es hat die Vorteile der Lernfähigkeit neuronaler Netzwerke, überwindet aber ihre Beschränkungen einschließlich der hohen Menge an bisher erforderlicher Rechenleistung. Es berücksichtigt die ganze Maschine oder den ganzen Prozess anstelle von isolierter Untersysteme. Schließlich nutzt es menschliches Expertenwissen über den Ernteprozess. Das Steuerungssystem vermeidet die Notwendigkeit einer konstanten Überwachung durch den Bediener und regelmäßige Anpassungen, so dass die Erschöpfung des Bedieners vermindert wird. Das Gerät kann kontinuierlich bei einem Leistungsniveau betrieben werden, das den besonderen Wünschen des Bedieners angepasst ist.

Das Steuerungssystem hat durch die Rückkopplung der durch es selbst gesteuerten Variablen eine geschlossene Schleife. Die bevorzugte Antwort, d. h. der Zusammenhang zwischen Ausgangswerten und Eingangswerten, wird durch Anpassung der vom Fuzzy-Inferenzsystem berücksichtigten Parameter (insbesondere Regeln und/oder Schlussfolgerungen) fortlaufend an die Signale angepasst. Das intelligente, hybride Steuerungssystem kombiniert die Vorteile menschlichen Expertenwissens, das beim Steuern komplexer Ernteprozesse von hohem Wert ist, mit einer Fuzzy-Logik und der Lernfähigkeit von neuronalen Netzen. Das Steuerungssystem kann effektiv mit vagen und ungenauen Informationen arbeiten, die typischerweise bei Erntemaschinen vorliegen. Als Fuzzy-Inferenzsystem kommt vorzugsweise ein mathematisches neuronales Netz zum Einsatz.

Ausgangswerte des Fuzzy-Inferenzsystems werden vorzugsweise auch zur Festlegung der anfänglichen Einstellungen des Geräts genutzt. Dazu können anfängliche Steuerungseinstellinformationen an die Steuerung gegeben werden, insbesondere über eine Bedienerschnittstelle, beispielsweise betreffend die Ernteguteigenschaften, die Erntebedingungen, die akzeptierbaren Gutverluste und/oder die akzeptierbaren Gutbeschädigungen. Zumindest ein Teil der Steuerungseinstellinformation kann auf der Vorgeschichte des Geräts basieren.

In den Zeichnungen ist ein nachfolgend näher beschriebenes Ausführungsbeispiel der Erfindung dargestellt. Es zeigt:
- Fig. 1: eine Seitenansicht einer Erntemaschine, in der ein erfindungsgemäßes Steuersystem verwendet wird,
- Fig. 2: ein schematisches Diagramm des Steuersystems,
- Fig. 3: ein schematisches Diagramm für die intelligente Steuerung,
- Fig. 4: ein schematisches Diagramm des überwachenden Controllers für die Steuerung der Figur 3,
- Fig. 5A und 5B: Beispiele für die Struktur der Fuzzylogiksteuerungen, wobei Figur 5A eine Regelbasis für eine Fuzzysteuerung mit zwei Eingaben und Figur 5B Zugehörigkeitsfunktionen für die Eingangs- und Ausgangsparameter zeigt,
- Fig. 6: die adaptiven Fuzzy-Interferenz-Systeme, und
- Fig. 7: ein Flussdiagramm für die Einstellung der Erntemaschine entsprechend der erfindungsgemäßen Verfahren.

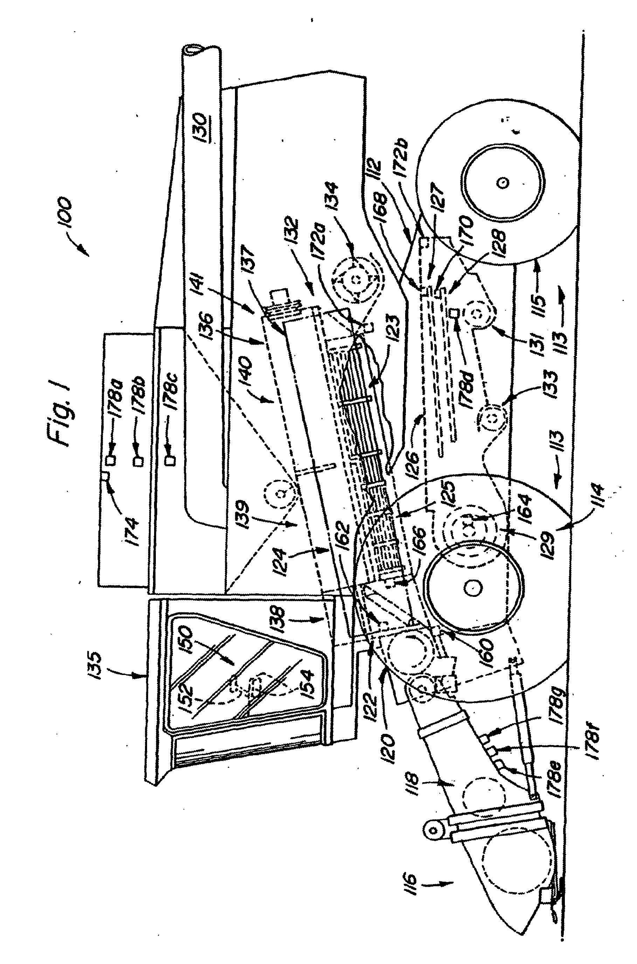

Es wird nun auf Figur 1 verwiesen, in der eine landwirtschaftliche Erntemaschine in Form eines Mähdreschers 100 gezeigt ist, der einen Hauptrahmen 112 mit einer Radanordnung 113 aufweist, die vordere und hintere, im Eingriff mit dem Boden befindliche Räder 114 und 115 umfasst, die den Hauptrahmen 112 zwecks einer Vorwärtsbewegung über ein Feld mit abzuerntendem Erntegut tragen. Die vorderen Räder 114 werden durch ein elektronisch gesteuertes hydrostatisches Getriebe 114t angetrieben.

Ein vertikal verstellbarer Erntevorsatz 116 in Form eines Schneidwerks wird verwendet, Erntegut abzuernten und es einem Schrägförderer 118 zuzuführen. Der Schrägförderer 118 ist schwenkbar mit dem Hauptrahmen 112 verbunden und umfasst eine Fördereinrichtung, um das geerntete Gut einer Leittrommel 120 zuzuführen. Die Leittrommel 120 führt das Gut nach oben durch einen Einlassübergangsabschnitt 122 hindurch und einer drehbaren Dresch- und Trenneinrichtung 124 zu. Andere Orientierungen und Typen der Drescheinrichtungen und andere Typen von Erntevorsätzen 116, wie quer angeordnete Rahmen, die einzelne Reiheneinheiten tragen, könnten auch verwendet werden.

Die rotierende Dresch- und Trenneinrichtung 124 drischt und trennt das geerntete Gut. Das Korn und die Spreu fallen durch einen Dreschkorb 125 und Trennroste 123 am Boden der Dreschund Trenneinrichtung 124 in ein Reinigungssystem 126, und werden durch ein Obersieb 127 und ein Untersieb 128 und einen Luftventilator 129 gereinigt. Das Reinigungssystem 126 entfernt die Spreu und führt das saubere Korn durch einen Kornschneckenförderer 133 einem Korntank zu. Das saubere Korn im Korntank kann durch einen Entladeschneckenförderer 130 in einen Lastwagen oder Anhänger entladen werden. Überkehr fällt in den Überkehrschneckenförderer 131 und wird zum Rotor 137 gefördert, wo sie zum zweiten Mal gedroschen wird.

Ausgedroschenes, vom Korn befreites Stroh wird von der Dreschund Trenneinrichtung 124 durch einen Auslass 132 einer Auswurftrommel 134 zugeführt. Die Auswurftrommel 134 stößt das Stroh wiederum an der Rückseite des Mähdreschers 100 aus. Es ist anzumerken, dass die Auswurftrommel 134 das vom Korn befreite Gut auch direkt einem Strohhäcksler zuführen könnte. Der Betrieb des Mähdreschers 100 wird von einer Bedienerkabine 135 aus gesteuert.

Die Dresch- und Trenneinrichtung 124 umfasst ein zylindrisches Rotorgehäuse 136 und einen im Rotorgehäuse 136 angeordneten, drehbaren Rotor 137. Der vordere Teil des Rotors 137 und das Rotorgehäuse 136 definieren einen Beschickungsabschnitt 138. Stromab des Beschickungsabschnitts 138 sind ein Dreschabschnitt 139, ein Trennabschnitt 140 und ein Auslassabschnitt 141. Der Rotor 137 ist im Beschickungsabschnitt 138 mit einer konischen Rotortrommel versehen, die wendelförmige Beschickungselemente zum Eingreifen in Gut aufweist, das sie von der Leittrommel 120 und vom Einlassübergangsbereich 122 erhält. Unmittelbar stromab des Beschickungsabschnitts 138 befindet sich der Dreschabschnitt 139.

Im Dreschabschnitt 139 weist der Rotor 137 eine zylindrische Rotortrommel auf, die mit einer Anzahl von Dreschelementen versehen ist, um das vom Beschickungsabschnitt 138 erhaltene Gut zu dreschen. Stromab des Dreschabschnitts 139 befindet sich der Trennabschnitt 140, in dem das im gedroschenen Gut noch enthaltene Korn freigesetzt wird und in das Reinigungssystem 126 fällt. Der Trennabschnitt 140 geht in einen Auslassabschnitt 141 über, in dem das vom Korn befreite Gut (Stroh) aus der Dresch- und Trenneinrichtung 124 ausgestoßen wird.

Eine in der Bedienerkabine 135 angeordnete Bedienerkonsole 150 umfasst konventionelle Bedienersteuerungen einschließlich eines Hydraulikverschiebehebels 152 zum manuellen Kontrollieren des Geschwindigkeitsbereichs und der Ausgangsgeschwindigkeit des hydrostatischen Getriebes 114t. Eine Bedienerschnittstelleneinrichtung 154 in der Kabine 135 erleichtert die Eingabe von Informationen in ein an Bord befindliches Prozessorsystem, das insgesamt mit 155 gekennzeichnet ist und eine automatische Geschwindigkeitssteuerung und zahlreiche andere, unten beschriebene Kontrollfunktionen für den Mähdrescher 100 bereitstellt. Anzeigen von an Bord befindlichen Sensoren 157 und Mikrocontrollern 158 werden von der Schnittstelleneinrichtung 154 bereitgestellt. Der Bediener kann verschiedene Typen von Informationen über eine Eingabeleitung 154a der Schnittstelleneinrichtung 154 eingeben, einschließlich der Gutart, des Orts, der Ausbeute und akzeptabler Kornverluste, Beschädigungen und Anteil. der in den Korntank gelangenden Materialien, die nicht Korn sind, und dergleichen.

Signale von den Sensoren 157 beinhalten Informationen über Umgebungsvariablen wie relativer Luftfeuchtigkeit und Informationen über vom an Bord befindlichen Prozessorsystem gesteuerten Variablen. Die Signale umfassen Fahrzeuggeschwindigkeitssignale von einem Radarsensor oder anderen konventionellen Bodengeschwindigkeitsumsetzer 160, Rotor- und Ventilatorgeschwindigkeitssignale von Umsetzern 162 und 164 und Dreschkorbspalt- und Obersieb- und Untersieböffnungssignale von Umsetzern 166, 168 bzw. 170. Zusätzliche Signale stammen von einem Kornverlustsensor 172a und linken und rechten Kornverlustsensoren 172b, einem Kornbeschädigungssensor 174 und verschiedenen anderen Sensoreinrichtungen am Mähdrescher 100. Signale von einem Tankreinheitssensor 178a, einem Massenflusssensor 178b, einem Kornfeuchtigkeitssensor 178c, einem Überkehrvolumensensor 178d und relativen Feuchtigkeits-, Temperatur- und Materialfeuchtigkeitssensoren 178e, 178f und 178g sind ebenfalls bereitgestellt.

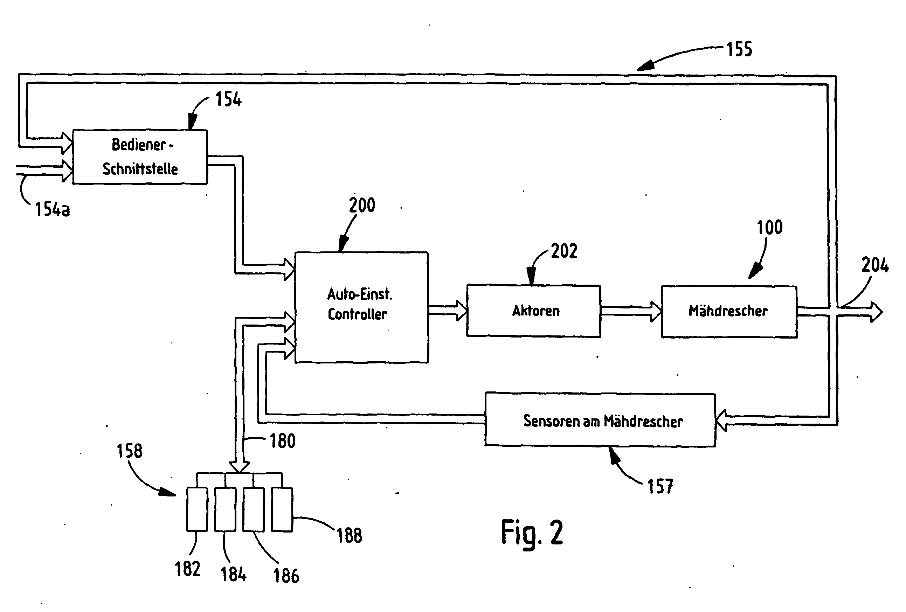

Ein CAN-Bus 180 (Fig. 2) leitet Signale von einem Kornfeuchtigkeitsmikrocontroller 182, einem Motorgeschwindigkeitsmonitor 184, einem Kornmassenflussüberwacher 186 und anderen Mikrocontrollern auf dem Mähdrescher 100 zu einer selbsttätig anpassbaren Steuerung 200. Signale von der Bedienerschnittstelle 154 und den Sensoren 157 der Erntemaschine werden ebenfalls der Steuerung 200 zugeführt.

Die selbsttätig anpassbare Steuerung 200 ist mit Aktoren 202 zum Steuern einstellbarer Ausgabeeinrichtungen auf dem Mähdrescher 100 verbunden. Rückkopplungs- und Eingabesignale werden der Steuerung 200 über die Leitung 204, die Sensoren und die Bedienerschnittstelle 154 zugeführt. Anzeige- und Maschinenzustandsinformationen werden in die Schnittstelle 154 über die Leitung 204 eingegeben.

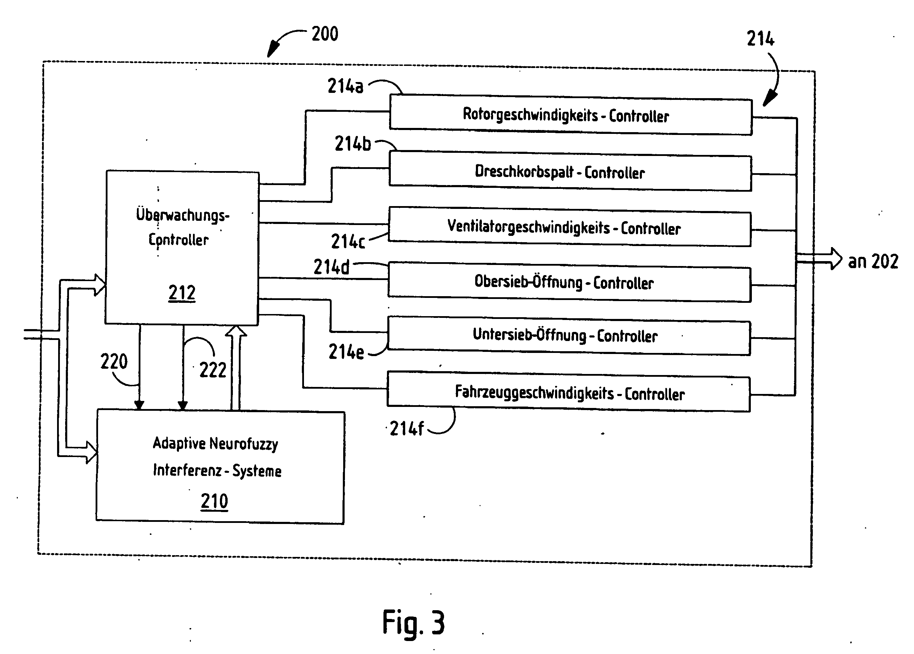

Die Steuerung 200 umfasst ein adaptives Neuro-Fuzzy-Inferenzsystem 210 (Fig. 3), einen Überwachungscontroller 212 und eine Menge an Controllern 214 niederen Niveaus. Der Überwachungscontroller 212 überwacht die Qualität des Erntevorgangs, wie Kornverlust, Anteil der in den Korntank gelangenden Materialien, die nicht Korn sind, und Kornbeschädigungen und dergleichen. Basierend auf den Messungen werden von der Steuerung 200 Einstellpunkte für alle kritischen Funktionselemente des Mähdreschers 100 festgelegt. Wenn der Überwachungscontroller 212 eine neue zu merkende Menge an Einstellungen lernt, wird ein Speichersignal über die Leitung 220 gesandt und das Inferenzsystem 210 passt sich an, um die neue Situation aufzunehmen. Die Parameter des Inferenzsystems 210 werden in einem an Bord befindlichen Speicher gespeichert. Ein Abfragesignal wird über die Leitung 222 gesandt, wenn der Überwachungscontroller 212 das Inferenzsystem 210 nach Einstellungen fragt. Die Menge an Controllern 214 niederen Niveaus für den Mähdrescher 100 (s. Fig. 3) umfassen einen Rotorgeschwindigkeitscontroller 214a, einen Dreschkorbspaltcontroller 214b, einen Ventilatorgeschwindigkeitscontroller 214c, einen Obersieböffnungscontroller 214d, einen Sieböffnungscontroller 214e und einen Fahrzeuggeschwindigkeitscontroller 214f. Die Ausgaben der Controller 214a-214f umfassen Steuersignale zur Steuerung der entsprechenden Aktoren 202 für die Rotorgeschwindigkeit, den Dreschkorbspalt, die Ventilatorgeschwindigkeit, die Öffnungen des Ober- und Untersiebs und die Fahrzeuggeschwindigkeit.

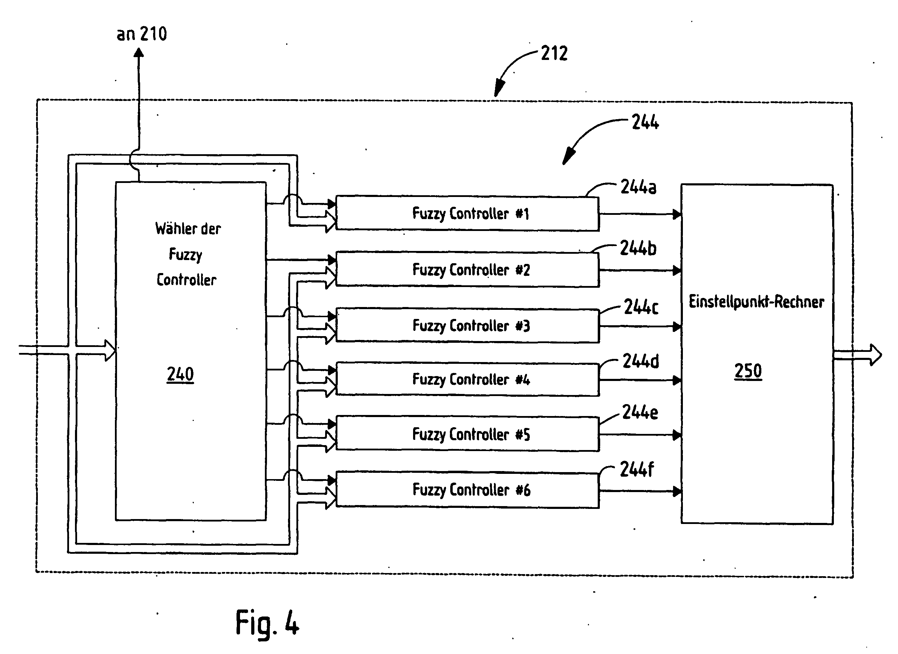

Der Überwachungscontroller 212 (Figur 4) umfasst einen Auswähler 240, der die Qualität des Ernteprozesses, wie Kornverluste, Anteil der in den Korntank gelangenden Materialien, die nicht Korn sind, und Kornbeschädigungen, überwacht. Basierend auf den Messungen legt eine Menge an Fuzzycontrollern 244 die Einstellungen der Einstellpunkte für alle kritischen Funktionselemente des Mähdreschers 100 fest. Die Fuzzycontroller 244a-244f stellen Einstellinformationen bereit für: a) Rotorgeschwindigkeit; b) Dreschkorbspalt; c) Ventilatorgeschwindigkeit; d) Obersieböffnung; e) Untersieböffnung; bzw. f) Fahrzeuggeschwindigkeit. Ein Einstellpunktrechner 250 empfängt die Einstellinformationen von den Fuzzycontrollern 244 und legt Einstellpunkte für alle gesteuerten Variablen fest. Die Einstellpunkte werden an die entsprechenden Controller 214a-214f niederen Niveaus (Fig. 39) gesandt, um die gewünschten optimierten Maschinenleistungen zu erreichen.

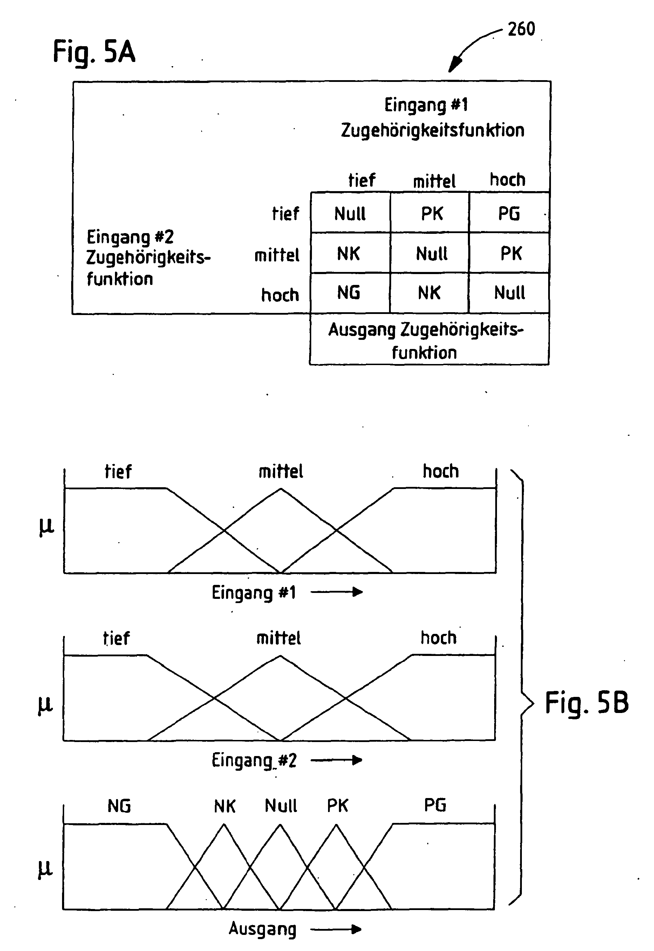

Ein Beispiel der Struktur der Fuzzycontroller 244 ist in den Figuren 5a und 5b gezeigt. Eine Regelbasis 260 mit zwei Eingaben wird in Figur 5a ausgewählt. Die Regelbasis 260 umfasst neun Regeln. Jede Fuzzy-Regel, oder Basiskomponente zum Aufnehmen von Wissen, hat eine Wenn-Komponente und eine Dann-Komponente. Für das gezeigte Beispiel ist, wenn der Eingang eins und der Eingang zwei gleich sind (niedrig, mittel oder hoch), dann der Ausgang null. Ein negativer großer Ausgang (NG) wird nur bereitgestellt, wenn Eingang eins tief und Eingang zwei hoch ist. Ein positiver großer Ausgang (PG) wird nur bereitgestellt, wenn Eingang eins hoch ist und Eingang zwei tief. Positive kleine (PK) und negative kleine (NK) Ausgänge werden bereitgestellt, wenn nur einer der Eingänge mittel ist.

Figur 5b zeigt Zugehörigkeitsfunktionen für die Eingabe-/Ausgangsparameter. Die Zugehörigkeitsfunktionen verknüpfen Eingänge und Ausgänge mit ihren Zugehörigkeitswerten. Die Zugehörigkeitsfunktionen können durch Wissen entschieden und später basierend auf einer Feinabstimmungsstrategie oder anderen Mitteln, wie neuronale Netzwerke, abgestimmt werden.

Der Algorithmus für jeden Fuzzyregel-basierenden Controller 244a-244f besteht aus vier Schritten:
1. Fuzzyzuordnung (Fuzzifikation): berechne den Grad, zu dem die Eingabedaten mit der Bedingung der Fuzzy-Regeln zusammenpassen;
2. Inferenz: berechne die Schlussfolgerung der Regel basierend auf dem Grad des Zusammenpassens;
3. Kombination: kombiniere den aus allen Fuzzy-Regeln gefolgerten Schluss in einen endgültigen Schluss; und
4. Defuzzifikation: konvertiere einen Fuzzy-Schluss in einen scharfen Schluss.

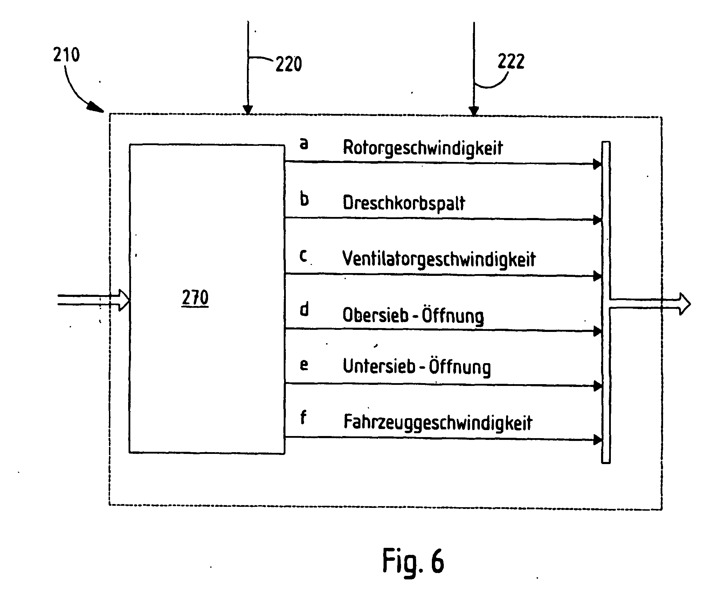

Das Inferenzsystem 210 (Fig. 6) ist als ein Neuro-Fuzzy-Inferenzsystem 270 mit sechs Ausgängen a - f verwendend dargestellt. Das System 270 kann ein einziges Neuro-Fuzzy-Inferenzsystem mit sechs Ausgängen oder sechs mit je einem einzigen Ausgang versehene Neuro-Inferenzsysteme aufweisen. Eingaben in das System 270 umfassen Erntebedingungen und Guteigenschaften (wie Guttyp, Ort und Kornausbeute) von der Bedienerschnittstelle 154 und Informationen von den an Bord befindlichen Sensoren 157 und Mikrocontrollern 158.

Das System 210 ist ein adaptives Neuro-Fuzzy-Inferenzsystem, das im Wesentlichen als Fuzzy-Inferenzsystem arbeitet, aber zusätzliche Lernfähigkeiten von neuronalen Netzwerken hat. Bei dem Neuro-Fuzzy-Inferenzsystem handelt es sich um ein Fuzzy-Inferenzsystem, in dem mathematische neuronale Netze verwendet werden. Derartige Systeme sind aus der Literatur bekannt, und werden beispielsweise unter der Internet-Adresse http://www.iicm.edu/greif/node)11.html näher beschrieben, deren Offenbarung durch Verweis hier mit aufgenommen wird. Neu gelernte Ernteerfahrung wird automatisch in das Inferenzsystem integriert.

Als Beispiel für die Funktionsweise des Neuro-Fuzzy-Inferenzystems sei die Frage gestellt, wann Getreide feucht ist. Im Handbuch eines Mähdreschers steht, bei feuchtem Getreide sei eine bestimmte Einstellung zu wählen. Feuchtigkeit ist ein grundlegender Einflussfaktor bei der Getreideernte. Welcher genaue Wert unter "feucht?" zu verstehen ist, bleibt aber unklar. Weiterhin können bei unterschiedlichen Fruchtarten die Schwellwerte unterschiedlich sein. Deshalb ist ein übergeordneter Fruchtartschalter nötig, den der Mähdrescherfahrer bedient. Aber auch innerhalb einer Fruchtart wird "feucht" in Spanien anders als in Schottland angesehen. Schließlich kann zur Zeit nur die Kornfeuchte direkt gemessen werden. Was aber für den Ausdrusch mindestens so wichtig ist, ist die Strohfeuchte, die sehr viel über die Zähigkeit des Strohs und über die Klebrigkeit bzw. Durchlässigkeit der gequetschten Strohmatte aussagt. Die Strohfeuchte ist nicht direkt messbar. Man kann aber annehmen, dass in einer Ernteregion in einer bestimmten Fruchtart die Zusammenhänge zwischen Strohfeuchte und Kornfeuchte ähnlich sind. In einer anderen Region sind die Zusammenhänge wieder anders. Also bietet es sich an, den Mähdrescher die typischen Eigenheiten der Region lernen zu lassen. Das ist Aufgabe des neuronalen Netzes. Es optimiert die Parameter zur Fuzzifizierung und Defuzzifizierung. Der Regler an sich ist ein Fuzzy-Regler. Er speichert besonders günstige Einstellkombinationen jeweils mit den Einflussfaktoren (Fruchtart, Feuchte, ...). Wenn der Überwachungscontroller 212 eine Abfrage an das Inferenzsystem 210 sendet, ermittelt dieses mit Hilfe der Fuzzy-Struktur die Erntebedingungen (feucht/trocken) anhand der neuesten Sensor-Messdaten und interpoliert nach den Fuzzy-Regeln aus den gespeicherten Datensätzen die optimalen Maschineneinstellungen.

Die Lernfähigkeit bedeutet, dass im Laufe eines Tages, einer Woche, einer Ernteperiode, bei gleichen Sensor-Messdaten für die Erntebedingungen nicht dieselben Maschineneinstellungen als Optimaleinstellung angeboten werden müssen. Die optimalen Einstellungen können sich in der Zwischenzeit verändert haben, weil früher noch nicht die Erfahrung vorlag oder weil andere, zumindest teilweise mit den verfügbaren Sensoren nicht messbare Einflüsse zu Änderungen geführt haben. Diese nicht messbaren Einflüsse sind ein Grund, warum Lernfähigkeit vorteilhaft ist.

Wie zuvor hervorgehoben, wird über die Leitung 220 ein Signal an das Inferenzsystem 210 gesandt, wenn der Überwachungscontroller 212 eine neue Menge an zu merkenden Einstellungen lernt, welches dann das Inferenzsystem 210 daran anpasst, die neue Situation in sich aufzunehmen. Dabei wird sowohl die Wennals auch die Dann-Seite geändert. Die neuen abzuspeichernden Parameter werden durch das Neuro-Fuzzy-Inferenzsystem bestimmt. Der Überwachungscontroller 212 sendet ein Abfragesignal über die Leitung 222, wenn er das Inferenzsystem 210 nach Einstellungen fragt.

Die Steuerung 200 stellt eine Steuerung mit geschlossener Schleife bereit. Die Steuerung 200 hat zusätzlich die Fähigkeit, zu lernen und das Neuro-Fuzzy-Inferenzsystem anzupassen.

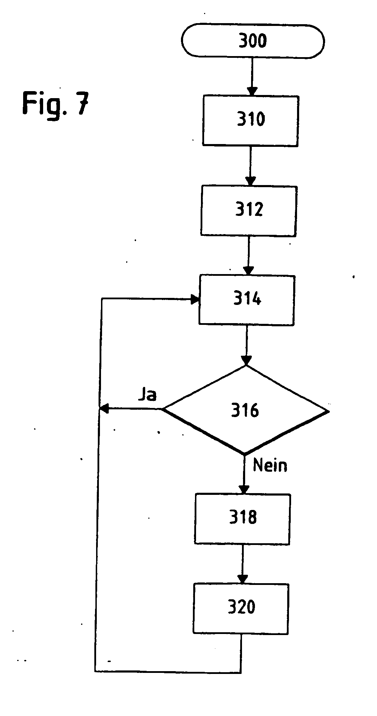

Figur 7 zeigt ein Flussdiagramm für die Mähdreschereinstellung durch den Prozessor unter Verwendung der oben beschriebenen Struktur und Verfahren. Nach Initiierung der Routine bei 300, werden bei 310 Gut- und Erntestrategieinformationen eingegeben.

Anfängliche Einstellungen für die Voreinstellung des Mähdreschers 100 werden bei 312 angewandt. Die anfänglichen Voreinstellungen können auf der Erntevorgeschichte, den Wetterbedingungen, Guteigenschaften und dergleichen basieren und sind im an Bord befindlichen Speicher gespeichert. Der Prozess wird bei 314 überwacht, in dem Ausgaben von den Rückkopplungswandlern und Kontrollsensoren, Mikrocontrollern und der Bedienerschnittstelle abgerufen werden. Wenn die Prozessvariablen und Parameter bei 316 alle innerhalb vorausgewählter Zielbereiche sind, wird der Prozess wieder bei 314 überwacht. Wenn ein oder mehrere Zielbereiche bei 316 nicht befriedigt sind, legt der Prozessor bei 318 eine Prozedur fest, der ein hoch erfahrener Bediener folgen würde, um die Aktoren zwecks einer Bewegung der betreffenden Prozessvariablen/Parameter in Richtung auf die Zielbereiche einzustellen. Bei 320 stellt der Prozessor fest, wie weit einzustellen ist und sendet Steuersignale an die Aktoren.

Nachdem die bevorzugte Ausführungsform beschrieben wurde, ist es offensichtlich, dass verschiedene Modifikationen möglich sind, ohne den Schutzbereich der Erfindung, wie er in den anliegenden Ansprüchen definiert ist, zu verlassen. Obwohl die Erntemaschine als Mähdrescher gezeigt ist, ist das oben beschriebene System auch für die Verwendung an anderen Erntemaschinen sowie anderen Geräten verwendbar, die wechselwirkende und komplexe Einstellungen zur Anpassung an verschiedene Typen sich kontinuierlich ändernde Betriebsbedingungen aufweisen. Das beschriebene System ist insbesondere an viele landwirtschaftliche Geräte und Baumaschinen anpassbar, bei denen Sensor- und Rückkopplungsinformationen relativ ungenau sind.

## Patentansprüche

1. Steuerungssystem zur Steuerung eines landwirtschaftlichen Geräts, das eine Mehrzahl an einstellbaren Einrichtungen aufweist, die den Betrieb des Geräts beeinflussen, mit:
einer Mehrzahl von Aktoren (202), die mit den einstellbaren Einrichtungen (214) verbunden sind,
einer Mehrzahl an Sensoren (157), die Eingabesignale bereitstellen, die Informationen über Arbeitsbedingungen des Geräts und von den einstellbaren Einrichtungen beeinflusste Variablen beinhalten, und
einer Steuerung (200) mit einem Fuzzy-Inferenzsystem (270), die mit den Aktoren (202) verbunden ist und auf die Eingabesignale reagiert und die einstellbaren Einrichtungen steuert,
**dadurch gekennzeichnet, dass** die Steuerung (200) eingerichtet ist, vom Fuzzy-Inferenzsystem (270) verwendete Parameter aus der Erfahrung des Geräts zu lernen und abzuspeichern,
dass das Gerät ein Mähdrescher (100) ist,
dass die einstellbaren Einrichtungen Dresch- und Trenneinrichtungen (124) und Reinigungseinrichtungen (126) sind,
dass die anpassbaren Parameter während der Fahrt angepasst durchgeführt werden und Parameter für die Dresch- und Trenneinrichtungen (124) und die Reinigungseinrichtungen (126) umfassen,
dass der Steuerung (200) sich auf die beeinflussten Variablen beziehende Eingabesignale zugeführt werden, dass die Steuerung (200) betreibbar ist, aus diesen Eingangssignalen Parameter des Fuzzy-Inferenzsystems (270) abzuleiten und abzuspeichern, die später vom Fuzzy-Inferenzsystem (270) berücksichtigt werden,
und dass die sich auf die beeinflussten Variablen beziehenden Eingabesignale sich auf die Leistung des Geräts beziehen.

2. Steuerungssystem nach Anspruch 1, **dadurch gekennzeichnet, dass** es die Parameter kontinuierlich an die Erfahrungen des Geräts anpasst.

3. Steuerungssystem nach einem der Ansprüche 1 oder 2, **dadurch gekennzeichnet, dass** es Rückkopplungseinrichtungen (162 - 170) umfasst, die Rückkopplungssignale bereitstellen, die Informationen über die Einstellungen der einstellbaren Einrichtungen beinhalten, und die der Steuerung (200) zugeführt werden, die sie berücksichtigt.

4. Steuerungssystem nach einem der vorhergehenden Ansprüche, **dadurch gekennzeichnet, dass** es menschliches Expertenwissen, Fuzzylogik und/oder ein neuronales Netz, insbesondere ein mathematisches neuronales Netz, umfasst.

5. Steuerungssystem nach einem der vorhergehenden Ansprüche, **dadurch gekennzeichnet, dass** die Signale von den Rückkopplungseinrichtungen (162 - 170) und/oder von den Sensoren (157) ungenaue Daten umfassen.

6. Steuerungssystem nach einem der vorhergehenden Ansprüche, **dadurch gekennzeichnet, dass** das Fuzzy-Inferenzsystem (270) zur anfänglichen Einstellung des Geräts verwendet wird.

7. Steuerungssystem nach einem der vorhergehenden Ansprüche, **dadurch gekennzeichnet, dass** das Gerät Einrichtungen zur Eingabe anfänglicher Steuerungseinstellinformationen an die Steuerung (200) umfasst.

8. Steuerungssystem nach Anspruch 7, **dadurch gekennzeichnet, dass** zumindest ein Teil der anfänglichen Steuerungseinstellinformationen auf der Vorgeschichte des Geräts basiert.

9. Steuerungssystem nach Anspruch 7 oder 8, **dadurch gekennzeichnet, dass** die Einrichtungen zur Eingabe anfänglicher Steuerungseinstellinformationen eine Bedienerschnittstelle (154) zur Eingabe von mindestens einer der folgenden Informationen aufweist: Wetterbedingungen, Erntegutbedingungen, Erntebedingungen, akzeptierbare Gutverluste und akzeptierbare Gutbeschädigungen.

10. Steuerungssystem nach einem der vorhergehenden Ansprüche, **dadurch gekennzeichnet, dass** die Sensoren (157) der Steuerung (200) Informationen über Bedingungen des Ernteguts, die Umgebung, das Gerät und die Einstellungen bereitstellen, wobei die Steuerung (200) auf die Sensorinformationen reagiert, um die Parameter als Reaktion auf die Bedingungen anzupassen.

11. Steuerungssystem nach einem der vorhergehenden Ansprüche, **dadurch gekennzeichnet, dass** die Steuerung (200) einen Überwachungscontroller (212) umfasst, der mit den Aktoren (202) und dem Fuzzy-Inferenzsystem (270) verbunden ist und einen Auswähler (240) umfasst, der auf Eingabesignale und vorzugsweise auf eingebbare Einstellinformationen reagiert, und eingerichtet ist, den Aktoren (202) vom Fuzzy-Inferenzsystem errechnete Werte zuzuführen, wobei der Überwachungscontroller (212) Einstellwerte der Aktoren (202) lernt und betreibbar ist, das Fuzzy-Inferenzsystem (270) anzuweisen, gelernte Einstellwerte als anfängliche Einstellwerte und Wissensbasis für spätere Steuerzwecke aufzunehmen.

## Claims

1. A control system for controlling an agricultural implement which has a plurality of adjustable devices influencing the operation of the implement, said system comprising:
a plurality of actuators (202) which are connected to the adjustable devices (214),
a plurality of sensors (157) which provide input signals containing information about operating conditions of the implement and variables influenced by the adjustable devices, and
a controller (200) having a fuzzy inference system (270) which is connected to the actuators (202) and responds to the input signals and controls the adjustable devices,
**characterised in that** the controller (200) is arranged to learn and store parameters from the experience of the implement which are used by the fuzzy inference system (270),
that the implement is a combine harvester (100),
that the adjustable devices are threshing and separating devices (124) and cleaning devices (126),
that the parameters are adapted during movement and include parameters for the threshing and separating devices (124) and the cleaning devices (126),
that input signals relating to the influenced variables are supplied to the controller (200),
that the controller (200) can be operated to derive and store from these input signals parameters of the fuzzy inference system (270) which are later taken into account by the fuzzy inference system (270),
and that at the input signals that are related to the influenced variables refer to the performance of the implement.

2. A control system according to claim 1, **characterised in that** it continuously adapts the parameters to the experiences of the implement.

3. A control system according to one of claims 1 or 2, **characterised in that** it includes feedback devices (162-170) providing feedback signals which contain information about the settings of the adjustable devices and which are supplied to the controller (200) which takes them into account.

4. A control system according to one of the preceding claims, **characterised in that** it includes human expert knowledge, fuzzy logic and/or a neural net, especially a mathematical neural net.

5. A control system according to one of the preceding claims, **characterised in that** the signals from the feedback devices (162-170) and/or from the sensors (157) include imprecise data.

6. A control system according to one of the preceding claims, **characterised in that** the neuro-fuzzy inference system (270) is used for the initial setting of the implement.

7. A control system according to one of the preceding claims, **characterised in that** the implement includes devices for inputting initial controller setting information to the controller (200).

8. A control system according to claim 7, **characterised in that** at least some of the initial controller setting information is based on the prior history of the implement.

9. A control system according to claim 7 or 8, **characterised in that** the devices for inputting initial controller setting information have an interface (154) for inputting information on at least one of the following: weather conditions, crop conditions, harvest conditions, acceptable crop losses and acceptable crop damage.

10. A control system according to one of the preceding claims, **characterised in that** the sensors (157) provide the controller (200) with information on conditions of the crop, the environment, the implement and the settings, the controller (200) responding to the sensor information in order to adapt the parameters as a response to the conditions.

11. A control system according to one of the preceding claims, **characterised in that** the controller (200) includes a supervisory controller (212), which is connected to the actuators (202) and the neuro-fuzzy inference system (270), and a selector (240) which responds to input signals and preferably to input setting information, and is arranged to supply the actuators (202) with values calculated by the neuro-fuzzy inference system, the supervisory controller (212) learning setting values of the actuators (202) and being able to be operated to direct the neuro-fuzzy inference system (270) to incorporate learned setting values as initial setting values and a knowledge source for later control purposes.

## Revendications

1. Système de commande pour commander un engin agricole qui comporte une multitude de dispositifs réglables qui influencent le fonctionnement de l'engin, comportant :
- une multitude d'actionneurs (202) qui sont raccordés aux dispositifs réglables (214),
- une multitude de capteurs (157) qui fournissent des signaux d'entrée qui contiennent des informations sur les conditions de travail de l'engin et des variables influencées par les dispositifs réglables, et
- une commande (200) comportant un système d'inférence flou (270), qui est reliée aux actionneurs (202) et réagit aux signaux d'entrée et commande les dispositifs réglables, **caractérisé en ce que** la commande (200) est agencée de manière à apprendre et à enregistrer les paramètres utilisés par le système d'inférence flou (270) à partir de l'expérience de l'engin,
**en ce que** l'engin est une moissonneuse-batteuse (100),
**en ce que** les dispositifs réglables sont des dispositifs de battage et de séparation (124) et des dispositifs de nettoyage (126), et **en ce que** les paramètres adaptables sont exécutés pendant la marche et comportent des paramètres pour les dispositifs de battage et de séparation (124) et les dispositifs de nettoyage (126),
**en ce que** des signaux d'entrée se rapportant aux variables influencées sont amenés vers la commande (200),
**en ce que** la commande (200) peut être actionnée pour déduire et enregistrer des paramètres du système d'inférence flou (270) à partir de ces signaux d'entrée qui sont pris en compte ultérieurement par le système d'inférence flou (270), et en ce les signaux d'entrée se référent aux variables influencées se référent à la performance de l'engin.

2. Système de commande selon la revendication 1, **caractérisé en ce qu'**il adapte les paramètres en continu aux expériences de l'engin.

3. Système de commande selon l'une quelconque des revendications 1 ou 2, **caractérisé en ce qu'**il comprend des dispositifs de rétroaction (162 à 170) qui fournissent des signaux de rétroaction qui contiennent des informations sur les réglages des dispositifs réglables et qui sont amenés vers la commande (200) qui en tient compte.

4. Système de commande selon l'une quelconque des revendications précédentes, **caractérisé en ce qu'**il comprend des connaissances d'expertise humaines, une logique floue et/ou un réseau neuronal, notamment un réseau neuronal mathématique.

5. Système de commande selon l'une quelconque des revendications précédentes, **caractérisé en ce que** les signaux des dispositifs de rétroaction (162 à 170) et/ou des capteurs (157) comportent des données imprécises.

6. Système de commande selon l'une quelconque des revendications précédentes, **caractérisé en ce que** le système d'inférence flou (270) est utilisé pour le réglage de départ de l'engin.

7. Système de commande selon l'une quelconque des revendications précédentes, **caractérisé en ce que** l'engin comporte des dispositifs pour l'entrée d'informations de réglage de la commande de début dans la commande (200).

8. Système de commande selon la revendication 7, **caractérisé en ce qu'**au moins une partie des informations de réglage de la commande de début se fonde sur les antécédents de l'engin.

9. Système de commande selon la revendication 7 ou 8, **caractérisé en ce que** les dispositifs pour l'entrée d'informations de réglage de la commande de début comportent une interface utilisateur (154) pour l'entrée d'au moins l'une des informations suivantes : conditions météorologiques, conditions du produit de récolte, conditions de la récolte, pertes de produit acceptables et détériorations acceptables du produit.

10. Système de commande selon l'une quelconque des revendications précédentes, **caractérisé en ce que** les capteurs (157) de la commande (200) fournissent des informations sur les conditions du produit de récolte, l'environnement, l'engin et les réglages, la commande (200) réagissant aux informations de capteur afin d'adapter les paramètres en tant que réaction aux conditions.

11. Système de commande selon l'une quelconque des revendications précédentes, **caractérisé en ce que** la commande (200) comporte un organe de commande de surveillance (212) qui est raccordé aux actionneurs (202) et au système d'inférence flou (270) et comporte un sélecteur (240) qui réagit aux signaux d'entrée et de préférence aux informations de réglage pouvant être entrées, et est agencé de manière à amener des valeurs calculées par le système d'inférence flou vers les actionneurs (202), l'organe de commande de surveillance (212) apprenant des valeurs de réglage des actionneurs (202) et pouvant être actionné pour ordonner au système d'inférence flou (270) de reprendre des valeurs de réglage apprises en tant que valeurs de réglage de début et comme base de connaissance à des fins de commande ultérieures.
